## Europäisches Patentamt
## European Patent Office
## Office européen des brevets

(11) Veröffentlichungsnummer: **0 291 461**
**A1**

(12) # EUROPÄISCHE PATENTANMELDUNG

(21) Anmeldenummer: **88810304.1**

(22) Anmeldetag: **09.05.88**

(51) Int. Cl.⁴: **G 06 K 15/12**

(30) Priorität: **14.05.87 CH 1860/87**

(43) Veröffentlichungstag der Anmeldung:
**17.11.88 Patentblatt 88/46**

(84) Benannte Vertragsstaaten:
**CH DE FR GB IT LI NL SE**

(71) Anmelder: **CIBA-GEIGY AG**
**Klybeckstrasse 141**
**CH-4002 Basel (CH)**

(72) Erfinder: **Waser, Rudolf**
**Zwinghofstrasse 414**
**CH-8173 Neerach (CH)**

**Thöny, Peter Georg**
**CH-7221 Schuders (CH)**

(54) **Verfahren und Vorrichtung zum Erzeugen einer Markierung an einem Werkstück.**

(57) Bei diesem Verfahren werden die Eckpunkte ($P_1...P_2$) der zu erstellenden Markierung mitsamt den diese Eckpunkte verbindenden Linien in einen Bildspeicher (16) eingespeichert. Der Speicher wird von einem Scanner (17) zeilenweise ausgelesen, der auch Stellsignale für eine zum Ablenken eines Energiestrahls geeignete Einrichtung (13) erzeugt. Die Ablenkeinrichtung enthält Ist-Wertgeber, deren Ausgangssignale an den Scanner geleitet werden. Der Scanner erzeugt dann in Uebereinstimmung mit der Stellung der Ablenkeinrichtung und den aus dem Bildspeicher ausgelesenen Daten Steuersignale für den Schalter (22) einer Einrichtung (11) zum Erzeugen von Energiestrahlimpulsen, welche Energiestrahlung geeignet ist, das Material des zu markierenden Werkstücks an der Oberfläche teilweise zu verdampfen oder zu zersetzen und dadurch eine dauerhafte Markierung zu erzeugen.

Das Verfahren ermöglicht, Markierungen zu erzeugen, die unabhängig von der Linienführung und Strichbreite einen homogenen Farbton oder Grauwert aufweisen.

Fig. 1

EP 0 291 461 A1

**Beschreibung**

## Verfahren und Vorrichtung zum Erzeugen einer Markierung an einem Werkstück

Die vorliegende Erfindung betrifft ein Verfahren zum Erzeugen einer aus punktförmigen Bildelementen bestehenden Markierung an einem Werkstück mittels eines gepulsten Energiestrahls, sowie eine Vorrichtung zum Ausführen dieses Verfahrens.

Zum dauerhaften Markieren von Werkstücken ist es bekannt, einen kontinuierlichen oder mit konstanter Frequenz gepulstem Energiestrahl über die Werkstückoberfläche zu lenken. Dabei wird das Material des Werkstücks im Bereich des auftreffenden Energiestrahls durch starkes Erhitzen verdampft oder zersetzt oder anders verändert, was praktisch immer eine dauerhafte Aenderung des Grauwerts oder Farbtons des Materials zur Folge hat. Derart arbeitende Laser-Markiereinrichtungen sind z.B. in US-A-43 70 667, US-A-40 79 458, US-A-42 14 249, US-A-37 10 019, US-A-44 60 909, US-A-46 42 622, GB-A-21 33 352 und EP-A-192 843 beschriebenen.

Die zum Markieren verwendeten Energiequellen erzeugen einen Energiestrahl, der im Auftreffbereich einen Durchmesser von weniger als 0,1 mm aufweist. Um eine deutlich sichtbare Markierung mit beispielsweise einer Strichbreite von 1 mm herzustellen, genügt es darum nicht, den Energiestrahl längs einer der Markierung entsprechenden einfachen Linie über das Werkstück zu führen, sondern diese Linie wird durch Ueberla gern einer kreisförmigen Bewegung oder einer quer zur Linie gerichteten Schwingung verbreitert. Dabei wird das Werkstück in den Bereichen ungleichmässig erhitzt, wo sich aufeinanderfolgende, kreisförmige Bewegungen schneiden oder bei Krümmungen der Linie der Abstand zwischen aufeinanderfolgenden Schwingungen vergrössert bzw. verkleinert wird. Das ungleichmässige Erhitzen wird bei Werkstoffen mit guter Wärmeleitfähigkeit gewöhnlich hinreichend ausgeglichen, so dass trotzdem eine gleichmässig erscheinende Markierung entsteht. Bei Werkstoffen mit schlechter Wärmeleitfähigkeit und insbesondere bei Kunststoffen führt das ungleichmässige Erhitzen zu einer unterschiedlichen Zersetzung des Werkstoffs, wobei Markierungen entstehen, deren Striche insbesondere an den seitlichen Rändern und in Krümmungen deutlich unterschiedliche Grauwerte oder Farbtöne aufweisen.

Zum Markieren von Kunststoff wird darum vorzugsweise ein gepulster Energiestrahl verwendet, der punktförmige Bildelemente erzeugt und der zuerst längs einer Linie in der Mitte des breiten Strichs und dann schleifenförmig um diese Linie gelenkt wird, bis die angestrebte Strichbreite erreicht ist, oder der quer zur Längsrichtung des Strichs zeilenweise von einem Rand des Strichs zum anderen gelenkt wird. Die Einrichtung zum Auslenken des Energiestrahls enthält zwei schwenkbare Spiegel, deren Schwenkgeschwindigkeit bei jeder Krümmung eines Strichs bzw. am Anfang und am Ende jeder zeilenförmigen Auslenkung beschleunigt oder verzögert wird. Die von den Energiestrahlimpulsen mit konstanter Folgefrequenz erzeugten punktförmigen Bildelemente liegen darum im Bereich von Krümmungen der Ablenklinie oder am Anfang und am Ende jeder Zeile dichter beieinander als längs einer geraden Linie bzw. in der Mitte einer Zeile. Diese ungleiche Dichte der punktförmigen Bildelemente bewirkt deutliche Unterschie de des Grauwerts oder Farbtons in der Strichbreite der Markierung.

Der vorliegenden Erfindung lag darum die Aufgabe zugrunde, ein Verfahren zu schaffen, mit dem Markierungen insbesondere in Kunststoff erzeugt werden können, die unabhängig von der Form der Markierung und der Strich- oder Flächenbreite einen homogenen Grauwert oder Farbton aufweisen.

Erfindungsgemäss wird diese Aufgabe mit einem Verfahren der eingangs genannten Art gelöst, das dadurch gekennzeichnet ist, dass die punktförmigen Bildelemente in der Form eines Rasters angeordnet werden.

Raster bedeutet in dieser Definition, dass die Bildelemente mindestens in der Richtung der Auslenkung des Energiestrahls, vorzugsweise aber in jeder Richtung, gleiche Abstände voneinander aufweisen.

Bei einer bevorzugten Ausführungsform des Verfahrens werden zum Erzeugen der in einem Raster angeordneten punktförmigen Bildelemente die Energiestrahlimpulse in Abhängigkeit von der Stellung der Ablenkeinrichtung ausgelöst.

Mit dem erfindungsgemässen Verfahren können grossflächige oder sehr feine Markierungen erzeugt werden, die auch dann den angestrebten homogenen Grauwert bzw. Farbton aufweisen, wenn die Markierung partiell unterschiedliche Strichbreiten aufweist, beispielsweise bei kaligraphisch geschriebenen Buchstaben oder Zahlen. Die Anordnung der punktförmigen Bildelemente mit gleichmässigen Abständen voneinander verhindert auch, dass in einem Werkstück mit schlechter Wärmeleitfähigkeit Wärmestaus entstehen, die die angestrebte Homogenität der Markierung beeinträchtigen.

Eine bevorzugte Vorrichtung zur Ausführung des Verfahrens enthält einen Computer mit mindestens einem Zeichensatzspeicher, einem Bildspeicher und einem Scanner, sowie einer ersten Einrichtung zum Erzeugen und mit einem Schalter zum Auslösen einer Energiestrahlung und eine zweite Einrichtung mit Mitteln zum zweidimensionalen Auslenken der Energiestrahlung auf einer Fläche, und ist dadurch gekennzeichnet, dass der Schalter mit den Mitteln zum Auslenken der Energiestrahlung derart synchronisiert ist, dass ein von der Auslenkgeschwindigkeit unabhängiges, regelmässiges Raster entsteht.

Nachfolgend wird die Erfindung anhand einer zur Ausführung des Verfahrens geeigneten Vorrichtung und mit Hilfe der Figuren beschrieben. Es zeigen:

Fig. 1 die Prinzipskizze einer zur Ausführung des erfindungsgemässen Verfahrens geeigneten Vorrichtung,

Fig. 2 den stark vergrösserten Ausschnitt aus einer Markierung mit punktförmigen Bildelementen, die in einem Raster mit waagerechten Zeilen und senkrechten Spalten angeordnet sind,

Fig. 3 den Ausschnitt aus einer Markierung entsprechend der Fig. 2, bei der das Raster von einer Folge punktförmiger Bildelemente umrandet ist,

Fig. 4 den gleichen Ausschnitt aus einer Markierung wie die Fig. 2, bei der das Raster von einer Folge sich gegenseitig überlappender und eine kontinuierliche Linie formender punktförmiger Bildelemente umrandet ist und

Fig. 5 den Ausschnitt aus einer Markierung, bei der die punktförmigen Bildelemente benachbarter Zeilen gegeneinander verschoben sind.

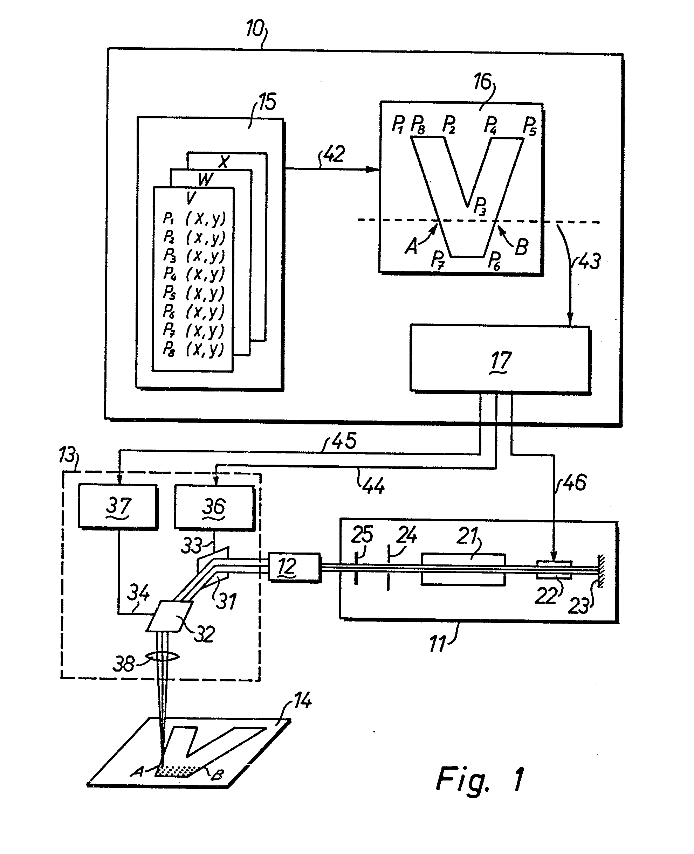

In Fig. 1 ist die Prinzipskizze einer zur Ausführung des erfindungsgemässen Verfahrens geeigneten Vorrichtung gezeigt, die einen Rechner 10, einen Laser 11, einen Strahlaufweiter 12 und eine Galvanometerspiegel-Ablenkeinrichtung 13 für den Laserstrahl enthält, sowie ein Werkstück 14. Der Rechner 10 ist ein Personalcomputer mit zugehörigem Programm, dessen wichtigste Teile ein Zeichensatz 15, ein Bildspeicher 16 und ein Scanner 17 sind. Der Laser 11 ist ein handelsübliches Modell mit dem aktiven Medium 21, auf dessen einer Seite ein Güteschalter 22 und ein Spiegel 23 und auf dessen anderer Seite eine Modenblende 24 und ein Auskoppelspiegel 25 angeordnet sind. Die Ablenkeinrichtung 13 enthält zwei drehbare Spiegel 31, 32, deren senkrechte bzw. waagerechte Drehachsen 33, 34 mit einer Stelleinrichtung 36 bzw. 37, beispielsweise einem Galvanometer, bewegungsverbunden sind, sowie eine Linse 38.

Zum Betrieb der beschriebenen Vorrichtung werden zuerst die zu erzeugenden Markierungen als Folge von Koordinatenpunkten, die den Eckpunkten der Umrisslinie (Hüllkurve) der Markierung entsprechen, im Zeichensatz 15 abgespeichert. Um beispielsweise eine Markierung in Form des Buchstabens "V" zu erzeugen, werden die im Zeichensatz 15 eingespeicherten Koordinatenpunkte $P_1$ bis $P_8$ dieses Buchstabens ausgelesen und in den Bildspeicher 16 übertragen. Dabei wird zwischen benachbarten Koordinatenpunkten eine Gerade gezogen, so dass im Bildspeicher die Hüllkurve des Buchstabens entsteht. Der Bildspeicher wird dann von einem Scanner 17 Zeile für Zeile abgetastet, wobei in jeder Zeile die dem Buchstaben zugeordneten Anfangs- und Endpunkte, im gezeigten Beispiel die Punkte A und B, festgestellt werden. Der Scanner steuert entsprechend diesen Anfangs- und Endpunkten die Stelleinrichtungen 36, 37 in der Ablenkeinheit 13. Die mit den Stelleinrichtungen bewegungsverbundenen Spiegel weisen Ist-Wertgeber auf, deren Ist-Wertsignale an den Scanner zurückgeleitet werden, der dann in Abhängigkeit von der Position der Spiegel den Güteschalter 22 steuert, was ermöglicht, unabhängig von der Winkelgeschwindigkeit der Spiegel einen gleichmässigen Abstand der Punkte, an denen der Laserstrahl auf das Werkstück 14 auftrifft, zu erreichen.

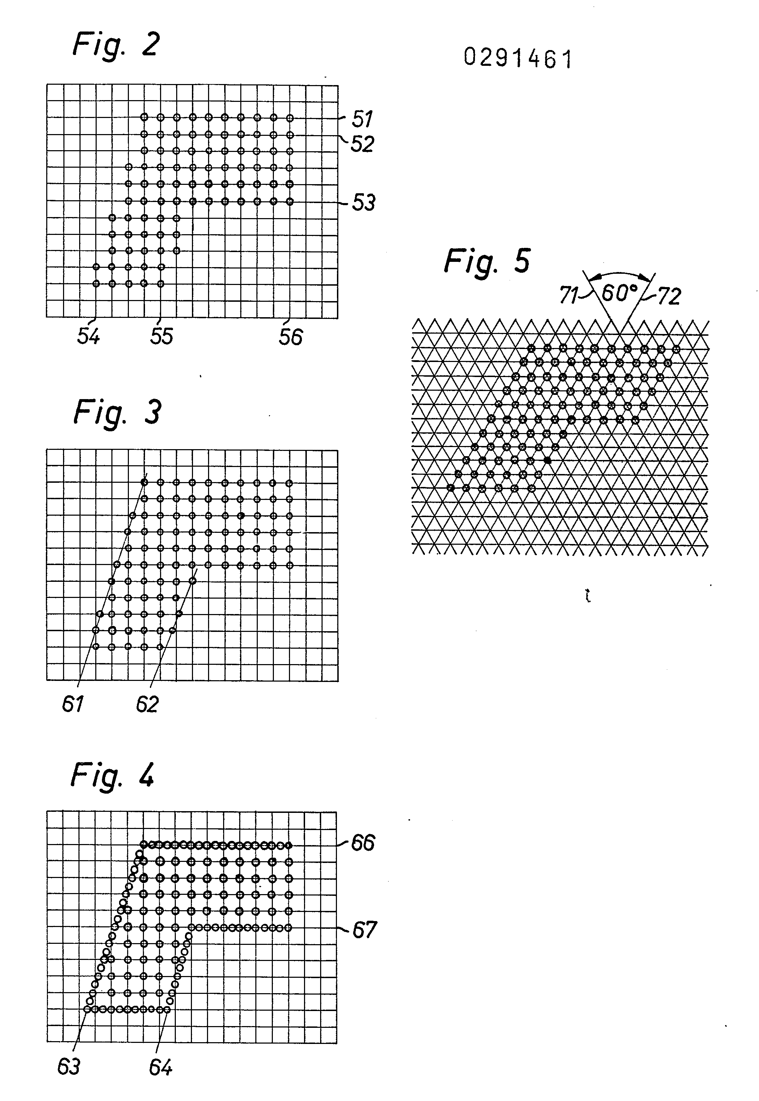

Die Fig. 2 zeigt einen stark vergrösserten Ausschnitt aus einer Markierung, deren Raster aus punktförmigen Bildelementen besteht. Die Bildelemente sind auf waagerechten Zeilen und senkrechten Linien (wovon nur die Zeilen 51, 52, 53 und die Linien 54, 55, 56 mittels Bezugszeichen identifiziert sind) angeordnet sind, welche Zeilen und Linien gleiche Abstände voneinander aufweisen.

Die Fig. 3 zeigt einen Ausschnitt aus einer Markierung mit dem gleichen Raster aus punktförmigen Bildelementen wie die Fig. 2. Bei dieser Markierung sind am Rand jeder Zeile zusätzliche Bildelemente eingefügt (die in der Figur der besseren Unterscheidung wegen als Kreisflächen gezeichnet sind), deren Orte nicht Rasterpunkten entsprechen, sondern auf einer geneigten Linie 61 bzw. 62 liegen, deren Neigung durch die Bildpunkte am Rande benachbarter Zeilen bestimmt ist, und wobei der Abstand zwischen den zusätzlichen Bildelementen längs der geneigten Linien der Rasterteilung entspricht.

Die Fig. 4 zeigt einen weiteren, der Fig. 2 entsprechenden Ausschnitt aus einer Markierung, bei der der Abstand zwischen den punktförmigen Bildelementen an den Rändern 63, 64 der Zeilen sowie längs der oberen und unteren Zeile 66 bzw. 67 kleiner ist als der Durchmesser der Bildpunkte, so dass sich letztere überlappen und praktisch eine geschlossene Linie bilden.

Die Fig. 5 schliesslich zeigt ein Raster aus Bildelementen, deren Orte den Kreuzungspunkten eines Gitters entsprechen, dessen Gitterlinien um jeweils 60° gegeneinander geneigt sind (isometrisches Raster), wie es z.B. für die Gitterlinien 71, 72 gezeigt ist.

Die beschriebene Vorrichtung zum Ausführen des erfindungsgemässen Verfahrens besteht aus handelsüblichen Baugruppen. Es wird davon ausgegangen, dass das Zusammenstellen solcher Baugruppen zu einer brauchbaren Vorrichtung und das Erstellen eines Programms für die einzelnen Arbeitsschritte zum Erzeugen einer Markierung oder einer Mehrzahl wiederholt verwendbarer Markierungen sowie das Einspeichern dieses Programms in den Festwertspeicher im Bereich fachmännischen Könnens liegen, weshalb weder die erwähnten Baugruppen noch das Programmieren im einzelnen beschrieben sind.

Bei einer praktischen Anwendung des erfindungsgemässen Verfahrens wurden die Tasten für eine Büromaschine mit alphanumerischen Zeichen markiert. Dazu wurden Tasten aus einem hellgrau eingefärbten Kunststoff verwendet, der unter dem Handelsnamen Crastin von der Ciba-Geigy vertrieben wird. Das vom Laser erzeugte Licht hatte eine Wellenlänge von 1,06 μm, der zeitliche Abstand zwischen aufeinanderfolgenden Impulsen betrug 1 ms und die Dauer der Impulse war etwa 0,2 μs entsprechend einer Impulsenergie von 1-2 mJoule. Der Durchmesser des Laserstrahls auf der Oberfläche der zu markierenden Taste betrug 70 μm. Im Bereich jedes auftreffenden Laserstrahlimpulses wurde der Kunststoff geschmolzen und teilweise zersetzt, so dass eine Markierung entstand, die als dunkelgraues, punktförmiges Bildelement mit einem Durchmesser von etwa 100 μm sichtbar war. Zum

Erzeugen einer Markierung in einem Rasterfeld von 4 mm Höhe und 3 mm Breite mit 20 Zeilen und 15 Bildelementen pro Zeile benötigt die Vorrichtung etwa 0,3 s. Das Ergebnis der Bearbeitung war immer eine Markierung mit einem homogenen, dunklen Grauton auf dem hellen Grauwert des nichtbearbeiteten Kunststoffs.

Es versteht sich, dass das beschriebene Verfahren und die zu seiner Ausführung verwendete Vorrichtung auf vielerlei Weise geändert und an spezielle Arbeitsbedingungen angepasst werden kann. Die Grösse des Rasterfelds, die Anzahl und der Abstand der Zeilen voneinander sowie der Spalten können beliebig gewählt werden, und auch die Dauer und Energie des Laserstrahlimpulses können an verschiedene Materialien und unterschiedliche Tiefen und Durchmesser der herzustellenden "Bohrlöcher" angepasst werden.

**Patentansprüche**

1. Verfahren zum Erzeugen einer aus punktförmigen Bildelementen bestehenden Markierung an einem Werkstück mittels eines gepulsten Energiestrahls,
dadurch gekennzeichnet, dass für eine Markierung mit homogenem Grauwert oder homogenem Farbton die punktförmigen Bildelemente in Form eines Rasters angeordnet werden.

2. Verfahren nach Anspruch 1, bei dem der Energiestrahl von einer Ablenkeinrichtung über die Oberfläche des zu markierenden Werkstücks geführt wird,
dadurch gekennzeichnet, dass zum Erzeugen der in einem Raster angeordneten punktförmigen Bildelemente die Energiestrahlimpulse mit der Ablenkung des Energiestrahls synchronisiert werden.

3. Verfahren nach Anspruch 1, dadurch gekennzeichnet, dass die punktförmigen Bildelemente der Markierung von einer geschlossenen Linie umrandet werden.

4. Verfahren nach Anspruch 3, dadurch gekennzeichnet, dass die geschlossene Linie aus einer Vielzahl dicht aneinanderliegender oder sich teilweise überlappender punktförmiger Bildelemente gebildet wird.

5. Verfahren nach Anspruch 1, dadurch gekennzeichnet, dass ein aus Kunststoff bestehendes Werkstück verwendet wird und die punktförmigen Bildelemente durch Verdampfen, Zersetzen oder chemische Umsetzung des Kunststoffs unter der Einwirkung der Energiestrahlimpulse gebildet werden.

6. Verfahren nach Anspruch 1, dadurch gekennzeichnet, dass das Raster der punktförmigen Bildelemente den Kreuzungspunkten von Gittern entspricht, deren Linien sich mit einem Winkel von 90° oder 60° schneiden.

7. Verfahren nach Anspruch 1, dadurch gekennzeichnet, dass als Energiestrahl ein Laserstrahl verwendet wird.

8. Verwendung des Verfahrens nach Anspruch 1 zum Markieren der Tasten von Büromaschinen mit alpha-numerischen Zeichen.

9. Vorrichtung zur Ausführung des Verfahrens nach Anspruch 1, enthaltend einen Computer (10) mit mindestens einem Zeichensatzspeicher (15), einem Bildspeicher (16) und einem Scanner (17), sowie einer ersten Einrichtung (11) zum Erzeugen und mit einem Schalter (22) zum Auslösen einer Energiestrahlung und eine zweite Einrichtung (13) mit Mitteln (36, 31; 37, 32) zum zweidimensionalen Auslenken der Energiestrahlung auf einer Fläche (14), dadurch gekennzeichnet, dass der Schalter (22) mit den Mitteln (31, 32) zum Auslenken der Energiestrahlung derart synchronisiert ist, dass ein von der Auslenkgeschwindigkeit unabhängiges, regelmässiges Raster entsteht.

0291461

Fig. 1

Fig. 2

Fig. 3

Fig. 4

Fig. 5

0291461

Europäisches
Patentamt

**EUROPÄISCHER RECHERCHENBERICHT**

Nummer der Anmeldung

EP 88 81 0304

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 133 352 (LASER APPLICATIONS LTD) <br> * Seite 1, Zeilen 19,34-37,69-84; Figur 1 * | 1-2,7 | G 06 K 15/12 |
| Y | --- | 8,9 | |
| Y | EP-A-0 091 124 (HITACHI) <br> * Anspruch 1; Figuren 1,2 * & US-A-4 642 622 (Kat. D) | 9 | |
| A | --- | 1 | |
| A | EP-A-0 082 281 (INTERNATIONAL BUSINESS MACHINES CORP.) <br> * Figur 4A; Seite 7, Zeile 23 - Seite 8, Zeile 3; Anspruch 1 * & US-A-4 460 909 (Kat. D) <br> --- | 3-4,6 | |
| A | DE-A-1 940 797 (R. HELL) <br> * Figur 1b; Seite 2, Zeilen 10-12 * <br> --- | 3-4,6 | |
| A | US-A-4 214 249 (M. KASAI) <br> * Zusammenfassung * <br> --- | 5 | RECHERCHIERTE SACHGEBIETE (Int. Cl.4) |
| Y | EP-A-0 192 843 (OLYMPIA) <br> * Figur; Zusammenfassung; Seite 3, Zeile 20 - Seite 4, Zeile 6 * <br> --- | 8 | G 06 K <br> B 41 B <br> B 23 K |
| A | DE-A-2 731 955 (XEROX CORP.) <br> * Figuren 7-10; Anspruch 1 * & US-A-4 079 458 (Kat. D) <br> ----- | 9 | |

Der vorliegende Recherchenbericht wurde für alle Patentansprüche erstellt

| Recherchenort | Abschlußdatum der Recherche | Prüfer |
|---|---|---|
| DEN HAAG | 05-08-1988 | HENROTTE I. |